# EUROPEAN PATENT SPECIFICATION

(11) **EP 3 623 166 B1**
(45) Date of publication and mention of the grant of the patent: **31.07.2024**
(21) Application number: 18914932.1
(22) Date of filing: 06.08.2018
(51) Int. Cl.: B44C 1/17, B32B 7/06, B32B 27/10, B41M 5/00, C09J 7/40, B41M 3/12, G09F 3/02

(54) **IMAGE TRANSFER SHEET, METHOD FOR PRODUCING IMAGE TRANSFER SHEET, AND IMAGE TRANSFER METHOD**
BILDTRANSFERFOLIE, HERSTELLUNGSVERFAHREN FÜR BILDTRANSFERFOLIE UND BILDTRANSFERVERFAHREN
FEUILLE DE TRANSFERT D'IMAGE, PROCÉDÉ DE PRODUCTION DE FEUILLE DE TRANSFERT D'IMAGE ET PROCÉDÉ DE TRANSFERT D'IMAGE

(30) Priority: 26.07.2018 JP 2018139897
(43) Date of publication of application: 18.03.2020
(73) Proprietor: ING CO.,LTD., Osaka 541-0055 (JP)
(72) Inventor: MORII, Tomoko, Osaka-shi Osaka 5410055 (JP); AIBA, Masamitsu, Osaka-shi Osaka 5410055 (JP)
(74) Representative: JWP Patent & Trademark Attorneys
(86) International application number: PCT/JP2018/029493
(87) International publication number: WO 2020/021727

(56) References cited:
- EP-A1- 0 951 518
- EP-A1- 2 604 444
- WO-A1-2017/204289
- JP-A- 2001 199 194
- JP-A- 2008 049 609
- JP-B1- 6 353 616
- JP-B2- 6 260 878
- JP-U- H0 367 043
- US-A1- 2006 169 399
- US-A1- 2016 032 149

## Description

### FIELD OF THE INVENTION

The present invention relates to an image transfer sheet for transferring any image onto a transfer target object; and a method for manufacturing the image transfer sheet or a method for transferring an image onto a transfer target object using the image transfer sheet.

### BACKGROUND OF THE INVENTION

Technologies for transferring an image onto a surface of an item, on which it is difficult to print an image directly, include a transfer technique with a substrate, wherein an image layer is printed on a transparent thin film-like substrate provided with an adhesive layer on its back surface, and wherein the entire substrate is affixed onto an item surface; and a transfer technique without a substrate, wherein eventually only an image layer is transferred directly onto an item surface. The former technique is generally known by "image stickers," "cutting sheets," etc., wherein the transferred image is spaced from the item surface by the interposing substrate thickness, thereby generating an uneven image surface as a result. Also, work is required to remove unwanted substrate parts bearing no image before or after the image transfer using a tool such as a cutting plotter. On the other hand, the transfer technique without a substrate enables a high-quality image transfer as if the transferred image was directly printed on an item surface, and this technique does not require the work to remove the non-image part of the substrate.

Known transfer techniques without a substrate include the water transfer, the thermal transfer, the sublimation transfer, the dry transfer, etc. Among others, the dry transfer is performed by affixing and pressing an image transfer sheet onto a surface of a transfer target object, wherein the image transfer sheet is defined by providing an image layer on the lower surface of a transfer film and applying adhesive thereover, and transferring only the image layer onto the transfer target object surface by adhesion, wherein no water or heat is used to allow high-quality image transfer.

The present inventors conducted research of the transfer technique without a substrate, and developed and received a patent right for an image transfer sheet, a method for manufacturing the image transfer sheet and a method for transferring an image using the method for manufacturing the image transfer sheet described in Patent Document 1 (WO/2017/204289). The image transfer sheet according to the present patent invention is defined by providing an image layer in part of an area between a transfer film as an upper layer and a glue layer as a lower layer, and releasably gluing release paper onto the lower glue layer, wherein the transfer film is configured to be releasable from the image layer, but easily adhesive to the glue layer. During the transfer, the image transfer sheet with the release paper peeled off is pressure-glued onto a transfer target object, and then, the transfer film is peeled off. At this time, the image layer is glued and transferred onto the transfer target object by the glue layer, but the glue layer part without the image layer is peeled and removed from the surface of the transfer target object together with the transfer film. Patent Document 1: JP-A-2017-209931 (WO/2017/204289)
US20160032149 discloses a decal is suitable for application to an aircraft structure that is covered with an incompletely cured base coat of paint. The decal has a polyester film with an adhesive applied to a first side. A release layer is applied to the polyester film and comprises a pattern engaging the adhesive to form a plurality of grooves in the adhesive layer. When the decal is applied to an uncured base coat of paint, offgasses formed during curing and drying of the base coat escape from beneath the decal through the grooves.

The honeycomb-shaped protrusions described in US20160032149 eliminate large bubbles when transferring a large-sized, low-definition image such as an aircraft body decal, but small bubbles are not completely eliminated.

The image transfer sheet according to the invention is based on a reversed concept to print an image layer of a normal image directly on a surface of a glue layer of a glued sheet prepared in advance, and then, cover the glued sheet with a transfer film to complete an image transfer sheet. Such an improvement solved problems such as the difficulty in even application of the glue layer during the manufacturing stage of conventional dry image transfer sheets and/or the laborious removal of the glue left on the part bearing no image layer after the image transfer. Also, the image transfer sheet according to the invention allowed transferring of an image layer with a three-dimensional feel by forming the image layer using the UV printing. Since the normal image is directly printed on the glue layer surface, the raised printed surface specific to the UV printing was enabled and the problematic air bubbles in and wrinkles of the image layer, often seen in the UV printing, have been successfully prevented.

However, the above-described image transfer sheet still had an unresolved issue of air left between the transfer target object and the glue layer, generating air bubbles during the image transfer onto an item. Since the image transfer sheet is ultimately affixed onto the transfer target object by hand, it is difficult to completely prevent the air bubbles from forming. Air bubbles not only compromise the aesthetic and quality of the transferred image, but also make the image layer susceptible to peel-off when the air bubbles form on the outer edge of the transferred image. Also, the air bubbles tend to form more as the size of transferred image increases and when the surface of the transfer target object is curved.

### SUMMARY OF THE INVENTION

In order to address the above and other problems of the conventional art, the purpose of the present invention is to provide an image transfer sheet for leaving no air bubbles between an image layer and a transfer target object, a method for manufacturing the image transfer sheet and a method for transferring an image.

In order to overcome the above challenges, an image transfer sheet of Claim 1 of the present invention comprises an image layer in part of an area between a transfer film as an upper layer and a glue layer as a lower layer, and the image transfer sheet is defined by the glue layer, a lower surface of which being provided with many individually independent fine protrusions in the entire lower surface, and a release paper releasably glued to the lower surface of the glue layer, wherein the transfer film is releasable from the image layer and easily adhesive to the glue layer, and wherein a lower surface of the transfer film is in contact with the image layer where there is the image layer, and is in contact with the glue layer where there is no image layer.

The transfer film as the upper layer is preferably transparent PET (polyethylene terephthalate) film with a surface processed to be releasable, but is not limited by it and may be any film whose lower surface is releasable from the image layer and easily adhesive to the glue layer. For example, if the glue is common pressure-sensitive adhesive containing acrylic resin as its main component, the transfer film is preferably film with the same acrylic resin.

Also, the shape of the many fine protrusions on the lower surface of the glue layer may be either dot-like or line-like, but in either way, according to the invention the height of the protrusions is 5-20 µm, when the protrusions are dot-like, the diameter and the interval between adjacent dot-like protrusions are 0.2 mm-1.0 mm, and when the protrusions are line-like, the line width and the interval between adjacent line-like protrusions are also at least 0.2-1.0 mm.

According to such a structure, the lower surface of the glue layer having the protrusions is exposed by peeling and removing the releasable release paper from the image transfer sheet. By pressure-gluing the glue layer onto the surface of the transfer target object and applying pressure on the transfer film surface, the image transfer sheet is affixed onto the transfer target object by the glue layer adhesion. At this time, by applying pressure selectively onto the part bearing the image layer, most of the air remaining between the glue layer and the transfer target object where there is the image layer moves through between the protrusions toward the part where there is no image layer, or released to outside from the edge of the image transfer sheet, wherein a trace amount of remaining air is also dispersed among the gap space between the protrusions, leaving no air bubbles recognizable by the naked eye.

Subsequently, by peeling and removing the transfer film of the top surface of the image transfer sheet, the image layer remains on the glue layer where there is the image layer, from which the transfer film is releasable. On the other hand, where there is no image layer, the glue layer remains glued to the lower surface of the transfer file, and peeled and removed from the surface of the transfer target object. As a result, only the image layer remains glued onto the surface of the transfer target object by the glue layer, to thereby complete the image transfer.

Next, the invention of Claim 2 is the image transfer sheet of Claim 1, wherein the image layer is ink printed on an upper surface of the glue layer by an inkjet printer. Also, the invention of Claim 3 is the image transfer sheet of Claim 2, wherein the image layer is UV ink printed on the upper surface of the glue layer by a UV printer.

Non-contact printers are inkjet printers, UV printers, and the like, and are a type of printers which drop ink directly onto the printing surface without any interposing plate material or transfer body directly in contact with the printing surface. The image layer according to the present invention is glued to the transfer target object via the glue layer as the ink particles are dropped and deposited on the upper surface of the glue layer, and dried and cured to form a film. The UV ink is formulated with a photoinitiator which triggers a photopolymerization reaction by UV light, monomers/oligomers which polymerize by the photopolymerization reaction and pigments as dyes.

Next, the invention of Claim 4 is a method for manufacturing an image transfer sheet, the method comprising the steps of: forming a glue layer having many individually independent fine protrusions, having the shape and dimensions as described above, by pressure-gluing a glued sheet, defined by a substrate and a glue layer provided on a lower surface of the substrate, onto an upper surface of a release paper, having many fine recesses, and subsequently peeling and removing the substrate and exposing the glue layer; printing ink on the exposed upper surface of the glue layer by a non-contact printer to thereby provide an image layer on part of the glue layer; and affixing a transfer film on the glue layer provided with the image layer, wherein the transfer film is releasable from the image layer and easily adhesive to the glue layer, and causing the transfer film to contact with a lower surface of the transfer film onto the image layer where there is the image layer, and with the glue layer where there is no image layer. Also, the invention of Claim 5 is the method for manufacturing the image transfer sheet of Claim 4, wherein the image layer is UV ink printed on the upper surface of the glue layer by a UV printer.

Next, the invention of Claim 6 is an image transfer method, using the image transfer sheet manufactured by the method of Claim 4, comprising the steps of: peeling and removing only the release paper from the image transfer sheet; pressure-gluing the lower surface of the glue layer of the image transfer sheet, with the release paper removed, onto a transfer target object; and peeling and removing the transfer film from the image transfer sheet pressure-glued to the transfer target object. Also, the invention of Claim 7 is the image transfer method of Claim 6, wherein the image layer is UV ink printed on the upper surface of the glue layer by a UV printer.

In the conventional image transfer sheets, there were possibilities for air bubbles to remain between the post-transfer image layer and the transfer target object, but in accordance with the image transfer sheets, the methods for manufacturing the image transfer sheets and the methods for transferring an image according to the present invention, at least air bubbles recognizable by the naked eye may be prevented. Thus, the present invention provides an effect in which image transfer work susceptible to air bubbles with the conventional art, such as transferring a relatively large image, image transfer onto a transfer target object with a curved surface, etc. may be performed easily and reliably.

### BRIEF DESCRIPTION OF THE DRAWINGS

Fig. 1 is a cross-sectional view showing one example of an image transfer sheet 1 according to a first embodiment;
Fig. 2 is a cross-sectional view showing one example of an image transfer sheet 2 according to a second embodiment;
Fig. 3 is a cross-sectional view showing the glue layer forming step (pressure-gluing of release paper) of the first embodiment;
Fig. 4 is a cross-sectional view showing the glue layer forming step (forming of fine protrusions) of the first embodiment;
Fig. 5 is a cross-sectional view showing the glue layer forming step (peeling removal of a substrate) of the first embodiment;
Fig. 6 is a cross-sectional view showing the printing step of the first embodiment;
Fig. 7 is a cross-sectional view showing the affixing step of the first embodiment;
Fig. 8 is a cross-sectional view showing the release paper removing step of the first embodiment;
Fig. 9 is a cross-sectional view showing the pressure-gluing step of the first embodiment;
Fig. 10 is a cross-sectional view showing the file peeling step of the first embodiment;
Fig. 11 is a cross-sectional view showing the glue layer forming step (glued sheet) of the second embodiment;
Fig. 12 is a cross-sectional view showing the glue layer forming step (glued roller) of the second embodiment;
Fig. 13 is a cross-sectional view showing the glue layer forming step (forming protrusions on the glue layer) of the second embodiment;
Fig. 14 is a cross-sectional view showing the glue layer forming step (affixing release paper 1) of the second embodiment;
Fig. 15 is a cross-sectional view showing the glue layer forming step (affixing the release paper 2) of the second embodiment;
Fig. 16 is a cross-sectional view showing the glue layer forming step (peeling removal of the substrate) of the second embodiment;
Fig. 17 is a cross-sectional view showing the printing step of the second embodiment; and
Fig. 18 is a cross-sectional view showing the affixing step of the second embodiment.

### DETAILED DESCRIPTION OF THE INVENTION

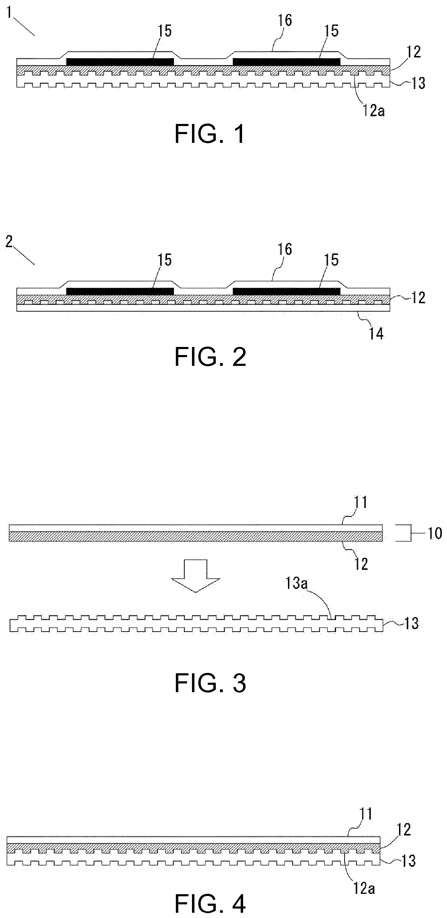

Embodiments of the technology will now be described with reference to the drawings. Fig. 1 is a cross-sectional view showing an example of an image transfer sheet 1 according to a first embodiment of the present invention; and Fig. 2 is a cross-sectional view showing an example of an image transfer sheet 2 according to a second embodiment of the present invention. The image transfer sheets 1, 2 have different cross sectional shapes for release paper 13 depending on the different manufacturing methods, but otherwise have a common structure.

The image transfer sheet 1 comprises an image layer 15 between a transfer film 16 as an upper layer and a glue layer 12 as a lower layer, and the glue layer 12 is defined by having its lower surface releasably glued to an upper surface of the release paper 13. The release paper 13 according to the first embodiment is provided with many individually independent fine recesses 13a across its upper surface, and the lower surface of the glue layer 12 has many individually independent fine protrusions 12a formed thereon so that the protrusions 12a mate with the recesses 13a. Note that the image layer 15 is printed directly on the upper surface of the glue layer 12 by a non-contact printer such as an inkjet printer, an UV printer or the like, wherein in the case of an inkjet printer, the image layer 15 is an ink layer, and wherein in the case of an UV printer, the image layer 15 is an UV ink layer which has been dried and cured into a thin film-like form through the photopolymerization reaction by UV radiation during the printing.

The material of the transfer film 16 is preferably transparent acrylic resin if the glue component of the glue layer 12 is acrylic adhesive as described below, but not necessarily limited to acrylic resin and may be any material releasable from the image layer 15 and easily adhesive to the glue layer 12. Also with a transparent transfer film 16, the image shape and colors may be visually recognized through the surface of the image transfer sheet 1, and therefore, it will be easier to perform positioning and color matching of the transparent transfer film 16 against a transfer target object O.

The glue layer 12 is, for example, a layer of pressure-sensitive adhesive formulated by acrylic resin and tackifier, and may have any thickness, but preferably of 10-100µm, in particular, about 30µm. The release paper 13 has a silicon film or the like at least on its upper surface, and the release paper 13 is releasable from the glue layer 12 and easily peels off at a normal temperature.

### (A method for manufacturing the image transfer sheet 1 and a method for transferring an image according to the first embodiment)

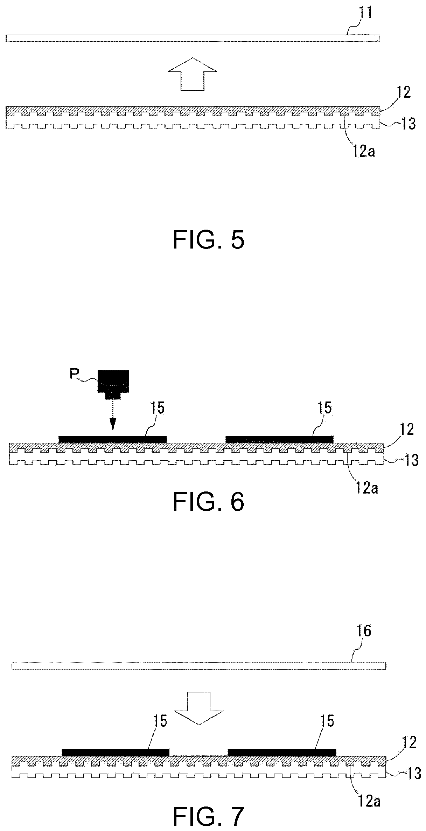

Fig. 3-Fig. 7 are simplified cross-sectional views showing a method for manufacturing the image transfer sheet 1 according to the first embodiment of the present invention step by step. First, Fig. 3-Fig. 5 show the glue layer forming steps, wherein a glued sheet 10, defined by the glue layer 12 provided on the lower surface of a substrate 11, is pressure-glued to the release paper 13, provided with the many fine recesses 13a across the upper surface of the release paper 13 (Fig. 3) to cause the lower surface of the glue layer 12 to enter into the recesses 13a to form the many independent fine protrusions 12a (Fig. 4), and subsequently the substrate 11 is peeled and removed to expose the upper surface of the glue layer 12 (Fig. 5). For the glued sheet 10, pressure-sensitive adhesive consisting of acrylic resin, polyolefin fiber, tackifier may be used as the glue layer 12; and ready-made pressure-sensitive double-sided adhesive tape using siliconized glassine paper may be used as the substrate 11. Note that the release paper 13 with the many fine recesses 13a in the upper surface thereof may be made by embossing the release paper 13 itself to provide the recesses 13a as illustrated, or, when siliconizing and conferring the releasability to the substrate surface of the release paper during its manufacturing, the silicon film may be embossed before it solidifies to provide the recesses 13a.

Fig. 6 shows the printing steps, wherein an image layer 15 is printed directly on the upper surface of the glue layer 12 by a non-contact printer. Specifically, the release paper 13 provided with the glue layer 12 is set in the non-contact printer, and then, ink of an arbitrary color is sprayed and printed directly onto the upper surface of the glue layer 12 from a printer head P. In the case of UV printing, by radiating UV light from a UV light source (not shown) immediately after UV ink is sprayed, ink particles are dried and cured through the photopolymerization reaction to thereby form a film-like image layer 15. Since the UV ink particles adhering to the glue layer 12 are dried and cured after they form sealing contact with the upper surface's recesses/protrusions of the glue layer 12, the UV ink particles are fixedly attached to the glue layer 12. Also, since the image layer 13 is printed as a normal image, performing the thick printing as a UV printing characteristic allows any printing thickness with a three-dimensional feel within specifications of the printer in use, and applying the thick printing for only a specific part of the printed image enables creating an accent to the image's three-dimensional feel.

Fig. 7 shows the affixing step, wherein, after the image layer 15 has been dried and fixed, the transfer film 16 is affixed onto the glue layer 12, which includes the image layer 15, with the transfer film 16 covering the range of the entire image, to thereby complete the image transfer sheet 1 shown in Fig. 1. The completed image transfer sheet 1 may be handled in a similar manner to that of the conventional stickers, and may be regarded as a product allowing transfer and printing of only images.

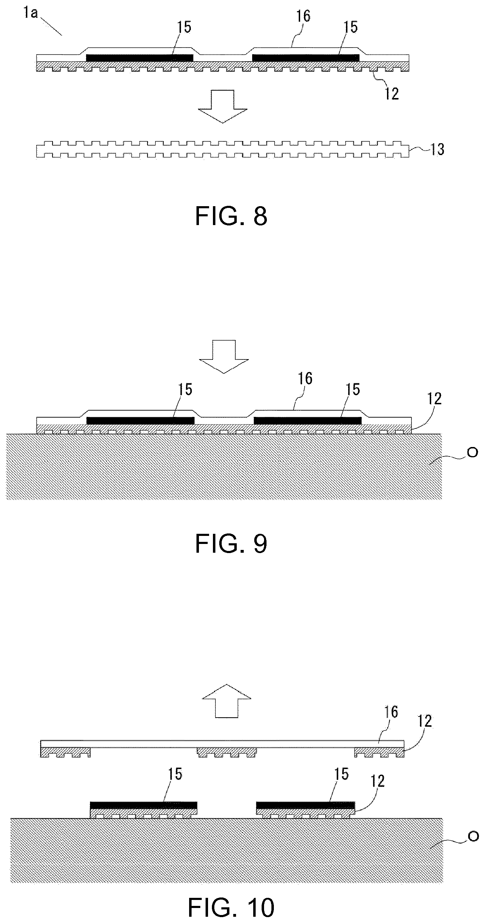

Figs. 8-9 are simplified cross-sectional views showing the steps of transferring the image layer 15 onto the surface of the transfer target object O. Fig. 8 shows the step of peeling and removing the release paper, wherein the release paper 13 is peeled and removed from the image transfer sheet 1. On the lower surface of the exposed glue layer 12, the many independent fine protrusions 12a are formed corresponding to the recesses 13a in the upper surface of the release paper 13.

Fig. 9 is a cross-sectional view showing the pressure-gluing steps of positioning the image transfer sheet 1 on the surface of a desired transfer target object O after the release paper 13 is peeled and removed, and pressure-gluing the lower surface of the glue layer 12 upon the transfer target object O. By applying pressure over the transfer film 16, the lower surface of the glue layer 12 consisting of pressure-sensitive adhesive is glued onto the surface of the transfer target object O, but at this time, it is desired to apply pressure only over the range of the image layer 15. This pressure may be applied through rubbing by finger tips, but in order to prevent wrinkling and/or deformation of the image layer 15, it is desirable to use a roller, a squeegee (spatula) or the like having even, smooth and appropriate resiliency to apply an uniform pressure.

At this time, by applying the pressure only over the range of the image layer 15, most of the air between the part of the glue layer 12 having the image layer 15 and the transfer target object O moves towards the part of the glue layer 12 without the image layer 15 through gaps between the protrusions 12a, or released to outside from the edge of the image transfer sheet 1, wherein a trace amount of remaining air is also dispersed among the gap space between the protrusions, leaving no air bubbles recognizable by the naked eye.

Fig. 10 is a cross-sectional view showing the film peeling step, wherein the transfer film 16 is peeled off after pressure-gluing of the image transfer sheet 1. When the transfer film 16 is peeled off after the image transfer sheet 1 is pressure-glued, the image layer 15, being glued to the glue layer 12, remains on the surface of the transfer target object O, to thereby complete the image transfer. On the other hand, since the glue layer 12 in the range without the image layer 15 is glued to the transfer film 16 and is removed from the surface of the transfer target object O, extra glue outside of the image may be prevented from remaining on the transfer target object O. Note that coating may be applied over the transfer target object O after the completion of the image transfer in order to improve abrasion resistance of the image layer 15 after its transfer and/or prevent peeling of the image layer 15 due to deterioration of the glue layer 12.

### (A method for manufacturing the image transfer sheet 2 and a method for transferring an image according to the second embodiment)

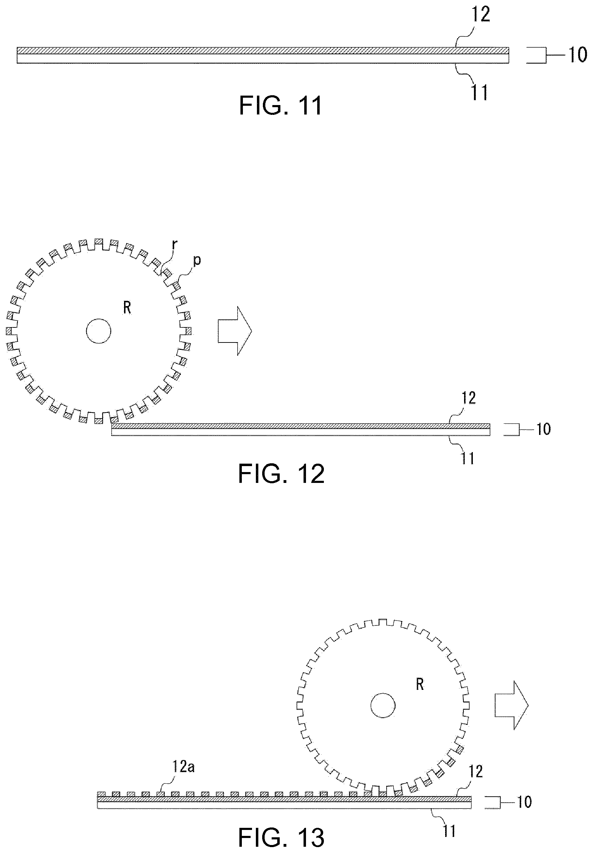

Figs. 11-18 are cross-sectional views showing a method for manufacturing the image transfer sheet 2 up to the glue layer forming step, printing step and affixing step according to the second embodiment of the present invention. The method for manufacturing the image transfer sheet 2 according to the second embodiment is similar to its counterpart of the first embodiment, except that the second embodiment has different means for forming the glue layer 12 with the many independent fine protrusions 12a provided on the lower surface of the glue layer 12 compared to the first embodiment; from the release paper removing step and thereafter, the second embodiment is similar to the first embodiment.

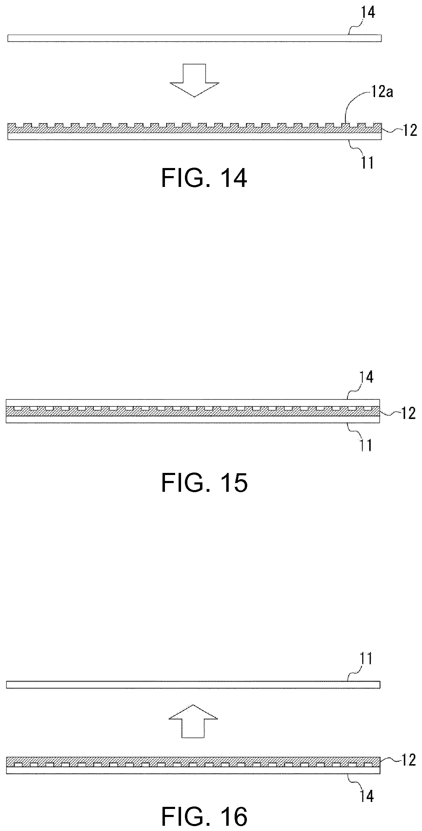

Figs. 11-16 show the glue layer forming steps. First, a glued sheet 10, which has a glue layer 12 provided on the lower surface of the same substrate 11 used in the step of manufacturing the image transfer sheet 1 according to the first embodiment, is flipped to have its glue side facing upward (Fig. 11). Next, a roller R having many independent fine protrusions r on its peripheral surface is prepared, and after applying a paste material p, with the same material as that of the glue layer 12, only on the surface of the protrusions r, the roller R is pressed against and rolled on the glue layer 12 of the glued sheet 10 (Fig. 12). Thus, the paste material p sequentially leaves the protrusions r to adhere on the surface of the glue layer 12 to form the many independent fine protrusions 12a (Fig. 13). Next, on the surface of the glue layer 12, where the many independent fine protrusions 12a are formed, release paper 14, surface of which is not embossed and smooth, is pressure-glued (Fig. 14, Fig. 15), and then, the substrate 11 is peeled off after the entirety is reversed upside down to expose the smooth surface of the glue layer 12 (Fig. 16). Note that the shape of the many independent fine protrusions r on the peripheral surface of the roller R may be either dot-like or line-like, wherein when the protrusions r are dot-like, the protrusions 12a formed on the glue layer 12 will be dot-like, and wherein when the protrusions r are in a line-like shape, the protrusions 12a will be line-like.

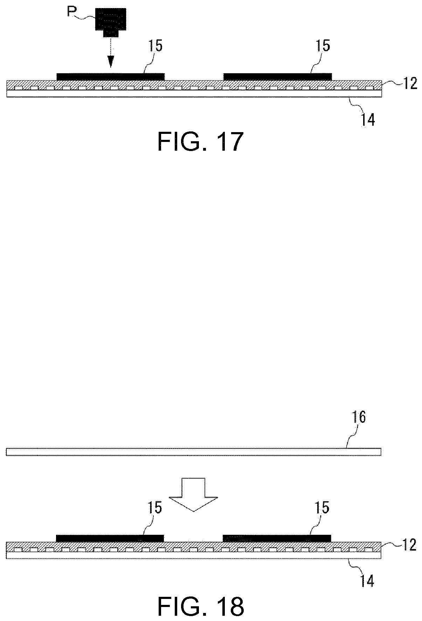

Fig. 17 shows the printing step and Fig. 18 the affixing step, wherein operations of these steps are basically similar to those of the first embodiment, and with these steps, the image transfer sheet 2 according to the second embodiment, as shown in Fig. 2, is completed. Also, the release paper removal step of removing only the release paper 14 from the image transfer sheet 2, the pressure-gluing step of pressure-gluing the glue layer 12 of the image transfer sheet 2 after removing the release paper 14, and the film peeling step of peeling and removing the transfer film 16 from the image transfer sheet 2 pressure-glued to the transfer target object O are also similar to their counterparts in the first embodiment.

Although specific structures of the image transfer sheets, the methods for manufacturing the image transfer sheets and the methods for transferring an image according to the present invention have been described, the present invention is not limited to the above-described embodiments and allows improvements or modifications within the scope of the appended claims. For example, the image layer 15 may be provided as in the image transfer sheet according to the second embodiment described in Patent Document 1, where the image layer is provided in a double-layer structure, in which case even when the image layer is transferred onto a highly-transparent transfer target object such as glass, each image layer seen from both sides of the transfer target object may be clearly recognizable without the image layer on the opposite side visible through the transparent transfer target object; or the image layer 15 may be provided as in the image transfer sheet according to the third embodiment of Patent Document 1, where a masking layer is further provided between image layers of the double-layer structure to enable changing of the color development and/or tone of each image layer.

Also, the present invention has a structure in which the transfer film is releasable from the image layer and easily adhesive to the glue layer, but the releasability between the transfer film and the image layer changes depending on the density of the ink constituting the image layer. Thus, adjusting the density of the ink used to print the image layer allows to control whether the image layer is transferred or peeled off together with the glue layer when peeling and removing the transfer film. According to the results of trials conducted by the present inventors using a UV printer (UFJ6042Mk2, Mimaki Engineering Co., Ltd.) and black ink (LUS-150 ink), when a light-colored image was printed with the ink density per unit area under 2 nanoliter/square mm, it was confirmed that upon peeling and removing of the transfer film after the image transfer, the image layer was peeled off from the transfer target object without remaining transferred. Note that the threshold of the ink density per unit area may be determined according to the ink and printer specifications. With such an effect as above, when printing the image layer, part of an image to be transferred may be printed with desired colors of ink each having a density equal to or higher than the threshold, whereas an image with no need to be transferred may be printed with a density less than the threshold to thereby allow having only desirable images on the image transfer sheet transferred and unwanted images not transferred. For example, on the image transfer sheet, crop marks for positioning may be printed as light-colored images so that the crop marks are not transferred after the transfer to thereby improve accuracy and efficiency of the transfer work.

### Industrial Applicability

According to the present invention, since air bubbles may be prevented from remaining between the transfer target object and the glue layer in the prior-art dry image transfer sheets with no substrate, air bubbles compromising aesthetics and/or quality of the transferred image may be prevented, and durability of the transferred image may be also improved. Thus, compared to the conventional art, transfer of a large image and/or image transfer to an item with a curved surface will be easier and the applications may be broadened.

## Claims

1. An image transfer sheet (1) comprising an image layer (15) in part of an area between a transfer film (16) as an upper layer and a glue layer (12) as a lower layer, the image transfer sheet defined by the glue layer (12), and a release paper (13) releasably glued to the lower surface of the glue layer (12), wherein the transfer film (16) is releasable from the image layer (15) and easily adhesive to the glue layer (12), wherein a lower surface of the transfer film (16) is in contact with the image layer (15) where there is the image layer (15), and is in contact with the glue layer (12) where there is no image layer (15), **characterized in that** the lower surface of the glue layer (12) is provided with many individually independent fine protrusions (12a) in the entire lower surface, wherein the shape of the protrusions (12a) is either dot-like or line-like, a height of the protrusions (12a) is 5-20 µm, and when the protrusions (12a) are dot-like, a diameter and an interval between adjacent dot-like protrusions (12a) are 0.2 mm-1.0 mm, and when the protrusions (12a) are line-like, a line width and an interval between adjacent line-like protrusions (12a) are also at least 0.2-1.0 mm.

2. The image transfer sheet (1) of Claim 1, wherein the image layer (15) is a dry cured ink on an upper surface of the glue layer (12), wherein the image layer (15) is directly printed on the upper surface of the glue layer (12) by an inkjet printer.

3. The image transfer sheet (1) of Claim 1, wherein the image layer (15) is a dry cured UV ink on an upper surface of the glue layer (12), wherein the image layer (15) is directly printed on the upper surface of the glue layer (12) by a UV printer.

4. A method for manufacturing an image transfer sheet, the method comprising the steps of:
forming a glue layer having many individually independent fine protrusions (12a) on a lower surface of the glue layer (12) by pressure-gluing a glued sheet, defined by a substrate and the glue layer (12) provided on a lower surface of the substrate, onto an upper surface of a release paper (13) having many fine recesses (13a), and subsequently peeling and removing the substrate and exposing the glue layer (12);
printing ink on the exposed upper surface of the glue layer (12) by a non-contact printer to thereby provide an image layer (15) on part of the glue layer (12); and
affixing a transfer film (16) on the glue layer (12) provided with the image layer (15), wherein the transfer film (16) is releasable from the image layer (15) and easily adhesive to the glue layer (12), and causing the transfer film (16) to contact with a lower surface of the transfer film (16) onto the image layer (15) where there is the image layer (15), and with the glue layer (12) where there is no image layer (15); wherein
the shape of the protrusions is either dot-like or line-like, a height of the protrusions is 5-20 µm, and when the protrusions are dot-like, a diameter and an interval between adjacent dot-like protrusions are 0.2 mm-1.0 mm, and when the protrusions are line-like, a line width and an interval between adjacent line-like protrusions are also at least 0.2-1.0 mm.

5. The method for manufacturing the image transfer sheet (1) of Claim 4, wherein the image layer (15) is UV ink printed on the upper surface of the glue layer (12) by a UV printer.

6. A method for transferring an image using the image transfer sheet (1) manufactured by the method of Claim 4, comprising the steps of:
peeling and removing only the release paper (13) from the image transfer sheet;
pressure-gluing the lower surface of the glue layer (12) of the image transfer sheet, with the release paper (13) removed, onto a transfer target object; and
peeling and removing the transfer film (16) from the image transfer sheet (1) pressure-glued to the transfer target object.

7. The image transfer method of Claim 6, wherein the image layer (15) is UV ink printed on the upper surface of the glue layer (12) by a UV printer.

## Patentansprüche

1. Bildübertragungsblatt (1) mit einer Bildschicht (15) in einem Teil eines Bereichs zwischen einem Übertragungsfilm (16) als oberer Schicht und einer Klebstoffschicht (12) als unterer Schicht, wobei das Bildübertragungsblatt durch die Klebstoffschicht (12) definiert ist, und ein Trennpapier (13), das lösbar auf die untere Oberfläche der Klebeschicht (12) geklebt ist, wobei der Übertragungsfilm (16) von der Bildschicht (15) ablösbar ist und leicht an der Klebeschicht (12) haftet, wobei eine untere Oberfläche des Übertragungsfilms (16) in Kontakt mit der Bildschicht (15) ist, wenn die Bildschicht (15) vorhanden ist, und in Kontakt mit der Klebstoffschicht (12) ist, wenn keine Bildschicht (15) vorhanden ist, **dadurch gekennzeichnet, dass** die untere Oberfläche der Klebeschicht (12) mit vielen einzeln unabhängigen feinen Vorsprüngen (12a) in der gesamten unteren Oberfläche versehen ist, wobei die Form der Vorsprünge (12a) entweder punktförmig oder linienförmig ist, eine Höhe der Vorsprünge (12a) 5-20 µm ist, und wenn die Vorsprünge (12a) punktförmig sind, ein Durchmesser und ein Abstand zwischen benachbarten punktförmigen Vorsprüngen (12a) 0. 2 mm-1,0 mm, und wenn die Vorsprünge (12a) linienförmig sind, betragen eine Linienbreite und ein Abstand zwischen benachbarten linienförmigen Vorsprüngen (12a) ebenfalls mindestens 0,2-1,0 mm.

2. Bildübertragungsblatt (1) nach Anspruch 1, wobei die Bildschicht (15) eine trockengehärtete Tinte auf einer oberen Oberfläche der Klebstoffschicht (12) ist, wobei die Bildschicht (15) durch einen Tintenstrahldrucker direkt auf die obere Oberfläche der Klebstoffschicht (12) gedruckt wird.

3. Bildübertragungsblatt (1) nach Anspruch 1, wobei die Bildschicht (15) eine trockengehärtete UV-Tinte auf einer oberen Oberfläche der Klebstoffschicht (12) ist, wobei die Bildschicht (15) direkt auf die obere Oberfläche der Klebstoffschicht (12) durch einen UV-Drucker gedruckt wird.

4. Verfahren zum Herstellen eines Bildübertragungsblattes, wobei das Verfahren die Schritte umfasst:
Ausbilden einer Klebstoffschicht mit vielen individuell unabhängigen feinen Vorsprüngen (12a) auf einer unteren Oberfläche der Klebstoffschicht (12) durch Druckverleimen eines geklebten Blattes, definiert durch ein Substrat und die Klebstoffschicht (12), die auf einer unteren Oberfläche des Substrats vorgesehen ist, auf eine obere Oberfläche eines Trennpapiers (13) mit vielen feinen Vertiefungen (13a), und anschließendes Abziehen und Entfernen des Substrats und Aussetzen der Klebstoffschicht (12);
Drucken von Tinte auf die ausgesetzte obere Oberfläche der Klebeschicht (12) durch einen berührungslosen Drucker, um dadurch eine Bildschicht (15) auf einem Teil der Klebeschicht (12) vorzusehen; und
Anbringen eines Übertragungsfilms (16) auf der mit der Bildschicht (15) versehenen Klebstoffschicht (12), wobei der Übertragungsfilm (16) von der Bildschicht (15) ablösbar ist und leicht an der Klebstoffschicht (12) haftet, und Bewirken, dass der Übertragungsfilm (16) mit einer unteren Fläche des Übertragungsfilms (16) auf der Bildschicht (15), wo die Bildschicht (15) vorhanden ist, und mit der Klebstoffschicht (12), wo keine Bildschicht (15) vorhanden ist, in Kontakt kommt; wobei
Form der Vorsprünge entweder punktförmig oder linienförmig ist, eine Höhe der Vorsprünge 5-20 µm beträgt, und wenn die Vorsprünge punktförmig sind, ein Durchmesser und ein Abstand zwischen benachbarten punktförmigen Vorsprüngen 0,2 mm-1,0 mm beträgt, und wenn die Vorsprünge linienförmig sind, eine Linienbreite und ein Abstand zwischen benachbarten linienförmigen Vorsprüngen ebenfalls mindestens 0,2-1,0 mm beträgt.

5. Verfahren zur Herstellung des Bildübertragungsbogens (1) nach Anspruch 4, wobei die Bildschicht (15) UV-Tinte ist, die durch einen UV-Drucker auf die obere Oberfläche der Klebstoffschicht (12) gedruckt wird.

6. Verfahren zum Übertragen eines Bildes unter Verwendung der Bildübertragungsfolie (1), die durch das Verfahren nach Anspruch 4 hergestellt wurde, umfassend die Schritte:
Abziehen und Entfernen nur des Trennpapiers (13) von dem Bildübertragungsblatt;
Druckverleimen der unteren Oberfläche der Klebstoffschicht (12) des Bildübertragungsblatts bei entferntem Trennpapier (13) auf ein Übertragungszielobjekt; und
Abziehen und Entfernen der Transferfolie (16) von der Bildübertragungsfolie (1), die mit dem Transferzielobjekt druckgeklebt ist.

7. Das Bildübertragungsverfahren nach Anspruch 6, wobei die Bildschicht (15) UV-Tinte ist, die auf die obere Oberfläche der Klebeschicht (12) durch einen UV-Drucker gedruckt wird.

## Revendications

1. Feuille de transfer d'image (1) comprenant une couche d'image (15) dans une partie d'une zone entre un film de transfer (16) en tant qu'une couche supérieure et une couche de colle (12) en tant qu'une couche inférieure, la feuille de transfer d'image défini par la couche de colle (12), et un papier amovible (13) étant de manière amovible collée à la surface inférieure de la couche de colle (12), dans laquelle le film de transfer (16) est amovible de la couche d'image (15) et facilement collant à la couche de colle (12), dans laquelle la surface inférieure du film de transfer (16) est en contact avec la couche d'image (15), lorsque il y a la couche d'image (15), et est en contact avec la couche de colle (12) lorsque il y n'a pas de couche d'image (15) **caractérisée en ce que** la surface inférieure de la couche de colle (12) est pourvue de plusieurs individuellement indépendants petites saillies (12a) dans la totalité de la surface inférieure, la forme de saillies étant soit ponctuelle, soit linéaire, une taille de saillies (12) étant de 5-12 µm, et lors les saillies (12a) sont ponctuelles, un diamètre et un interstice entre les saillies ponctuelles adjacentes (12a) sont de 0.2mm-1.0mm, et lors les saillies (12a) sont linéaires, une largeur de ligne et un interstice entre les saillies linéaires adjacentes (12a) sont également au moins de 0.2mm-1.0mm.

2. Feuille de transfer d'image (1) selon la revendication 1, dans laquelle la couche d'image (15) est appliqué à sec et durci sur la surface supérieure de la couche de colle (12), la couche d'image (15) étant directement imprimé sur la surface supérieure de la couche de colle (12) par imprimante à jet d'encre.

3. Feuille de transfer d'image (1) selon la revendication 1, dans laquelle la couche d'image (15) est d'encre appliqué à sec et durci par rayonnement UV sur la surface supérieure de la couche de colle (12), la couche d'image (15) étant directement imprimé sur la surface supérieure de la couche de colle (12) par imprimante UV

4. Procédé pour fabriquer une feuille de transfer d'image, la procédé comprenant les étapes de:
former une couche de colle ayant plusieurs individuellement indépendants petites saillies (12a) sur une surface inférieure de la couche de colle (12) par collage à pression une feuille collé, défini par un substrat et la couche de colle (12) pourvue sur une surface inférieure du substrat, sur une surface supérieure du papier amovible (13) ayant plusieurs petits évidements (13a), et ultérieurement peler et enlever le substrat et exposer la couche de colle (12) ;
imprimer à l'encre sur la surface supérieure exposé de la couche de colle (12) par imprimante sans contact pour ainsi placer la couche d'image (15) sur une partie de la couche de colle (12) ; et
apposer un film de transfer (16) sur la couche de colle (12) pourvue avec la couche d'image (15), dans laquelle le film de transfer (16) est amovible de la couche d'image (15) et facilement collant à la couche de colle (12), et mettre le film de transfer (16) en contact avec une surface inférieure du film de transfer (16) sur la couche d'image (15), lorsque il y a la couche d'image (15), et avec la couche de colle (12) lorsque il y n'a pas de couche d'image (15) ; dans lequel
la forme de saillies est soit ponctuelle, soit linéaire, une taille de saillies est de 5-20 µm, et lors les saillies sont ponctuelles, un diamètre et un interstice entre les saillies ponctuelles adjacentes sont de 0.2mm-1.0mm, et lors les saillies sont linéaires, une largeur de ligne et un interstice entre les saillies linéaires adjacentes sont également au moins de 0.2mm-1.0mm.

5. Procédé pour fabriquer une feuille de transfer d'image selon la revendication 4, dans laquelle la couche d'image (15) est imprimé à l'encre par rayonnement UV sur la surface supérieure de la couche de colle (12) par imprimante UV

6. Procédé permettant de transférer une image en utilisant la feuille de transfer d'image (1) fabriquée par la procédé selon la revendication 4, comprenant les étapes de:
peler et enlever seulement le papier amovible (13) de la feuille de transfer d'image ;
coller à pression la surface inférieure de la couche de colle (12) de la feuille de transfer d'image, le papier amovible (13) étant enlevé, sur un objet cible de transfer ; et
peler et enlever le film de transfer (16) de la feuille de transfer d'image (1), collé à pression au objet cible de transfer.

7. Procédé de transfer d'image selon la revendication 6, dans laquelle la couche d'image (15) est imprimé à l'encre par rayonnement UV sur la surface supérieure de la couche de colle (12) par imprimante UV
